# EUROPEAN PATENT SPECIFICATION

(11) **EP 1 487 259 B1**
(45) Date of publication and mention of the grant of the patent: **28.12.2005**
(21) Application number: 02722672.9
(22) Date of filing: 22.03.2002
(51) Int. Cl.: A01K 29/00, A01K 15/02

(54) **A VOCAL CONNECTION SYSTEM BETWEEN HUMANS AND ANIMALS**
SPRACHVERBINDUNGSSYSTEM ZWISCHEN MENSCHEN UND TIEREN
SYSTEME DE CONNEXION VOCALE ENTRE HUMAINS ET ANIMAUX

(43) Date of publication of application: 22.12.2004
(73) Proprietor: C.R.F. Società Consortile per Azioni, 10043 Orbassano (TO) (IT)
(72) Inventor: PERLO, Pietro, Guiseppe, I-12048 Sommariva Bosco (IT)
(74) Representative: Gallarotti, Franco
(86) International application number: PCT/IT2002/000183
(87) International publication number: WO 2003/079775

(56) References cited:
- EP-A- 0 730 261
- EP-A- 0 813 186
- WO-A-02/15678
- GB-A- 2 350 263
- US-A- 4 967 696
- US-A- 5 749 324
- US-A- 5 818 354
- US-B1- 6 254 536

## Description

The present invention is directed to a vocal connection system between humans and animals.

Scientific studies and tests have been carried out in the past with regard to the possibility of establishing a communication between humans and animals. To this end, tests have been carried out by positioning a number of sensors on the head of the animal which are connected to a computer and detecting the emission of various signals from the animal brain as a function of each different specific thought/wish of the animal (feeling of hunger, thirst, fear, etc.).

Systems are also known for communicating with animals which enable sound patterns emitted by the animals to be automatically identified, by attributing the corresponding meaning thereto.

In this regard, for instance, International Patent Application WO 00/13393 discloses a system of this kind in which an audio interface is provided able to receive sounds emitted by the animals, a memory unit which includes pre-programmed sound patterns and a computer which activates an interface for communication with a remote unit when the sounds emitted by the animals correspond to determined pre-programmed patterns. Systems of this kind have been used for remote control of cattle and for immediately identifying situations of distress of specific animals so as to enable an attendant to promptly intervene.

Other similar solutions provide for the use on dogs of collars which include a microphone and an electronic unit provided with a LCD display. The unit is able to display pre-programmed words and sentences, which should express the feelings or mood of the dog on the basis of the way of barking, detected by means of the microphone.

Devices are also known which are called "electronic collars" used for training dogs. These collars integrate one or more electrodes which enable a trainer to cause electric shocks of variable intensity to the animal, through a remote control. In this manner, the trainer may immediately correct an error made by the dog during its training, while being distant therefrom.

However, at present there are no devices in the art which can provide a real bi-directional communication between humans and animals.

On the other hand, the possibility of using a reliable and efficient system for vocal communication with animals, in particular with domestic animals, would be enormously appreciated by those who love animals and own one or more of them, apart from opening the way to the possibility of an easier training of the domestic animal, also by non experts.

In view of providing this possibility, the invention is directed to a vocal connection system between humans and animals, in particular domestic animals, characterised in that it comprises:
- a matrix of sensor which is to be positioned on the animal, in particular on its head and/or its neck, for converting information detected on the animal body into electric signals indicative of a status of the animal, in terms of stimuli, feelings, events, actions or behaviours,
- processing means operatively associated to the sensor matrix, including memory means in which human vocal messages are recorded corresponding to different status of the animal,
- a loudspeaker operatively connected to the processing means,
- said processing means being arranged for receiving the signals coming from the sensors and for activating said loudspeaker in order to emit a vocal message selected in said memory means, as a function of said received signals.

Once the various stimuli emitted by the body of the animal in the various situations are detected, it is then possible to cause activation of a pre-recorded simplified vocal language (such as "I am hungry", "I am thirsty", etc.) which thus simulates the possibility of speaking for the animal.

In the preferred embodiment of the invention, the system further comprises means for vocal recognition adapted to provide the processing means with signals representative of the contents of vocal messages emitted by the human, and stimuli generating means operatively associated to the body of the animal, in particular to the head and/or to its neck, which receive from the processing means said signals representative of the contents of the vocal messages emitted by the user and send corresponding stimuli to the animal brain.

Due to the above-mentioned characteristic, as well as to the presence of a controlling logic which is preferably based on the use of neural networks, the system according to the invention can be programmed to provide an interactive self-learning method in which humans and animals are at the same level.

An embodiment of the invention will be further described in the annexed drawings, given purely by way of non limiting example, in which:
- Figure 1 shows the head of a domestic animal, specifically a dog, with a collar on which a unit is positioned which forms part of the system according to the invention, and
- Figure 2 is a block diagram which shows the structure of the unit of figure 1 in a simplified form.

With reference to the drawings, numeral 1 generally designates a unit for bi-directional communication between humans and animals, made according to the teachings of the present invention.

Unit 1 includes a number of sensors 2, provided for detecting and sending signals 4 to a microprocessor 3, these signals being representative of various thoughts/wishes of the animal.

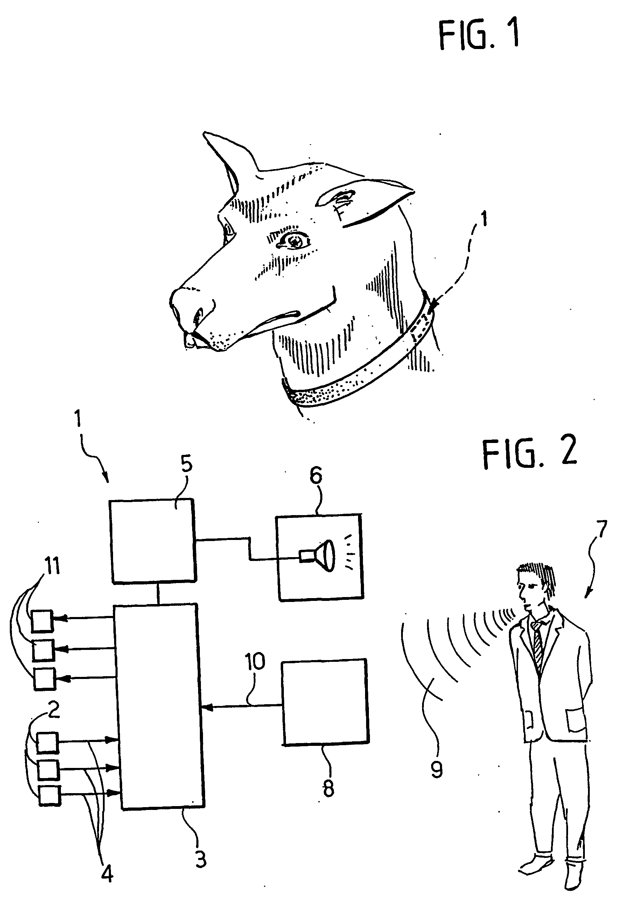

In the preferred embodiment of the invention, the unit 1 is integrated in a collar, designated by C in figure 1, so that first and second sensors 2 are positioned just below a respective ear of the animal, the remaining sensors being arranged around the neck of the animal.

In this manner, the above-mentioned first and second sensors 2 are close to the occipital cortex (rear O1 and rear O2: even number on the right side of the skull, and odd number on the left side of the skull) and are particularly adapted for detecting cerebral waves. The remaining sensors 2 are instead mainly intended for recording signals in an annular area relatively close to the volume where cerebral signals are generated, i.e. the neck of the animal, and where contraction of muscles and nerves are relevant for the purpose which is here of interest.

The detections carried out by the sensors 2 are substantially of electroencephalographic (EEG) and electromiographic (EMG) type.

As known, electroencephalography makes use of electrodes arranged on the head of a subject to detect and measure patterns of electric activity of the brain, provided by millions of neurons located mainly in the cerebral cortex. On the other hand, electromiography is a similar technique, aimed to the detection of electric activity due to muscular contractions and to the analysis of the qualitative and quantitative variations of potential of the moving member.

EEG and EMG analysis can provide information useful and objective on specific transient stimuli-events-actions-behaviours of a subject under examination. In this regard, it is to be noted that sensors 2 are not provided only to detect conventional cerebral waves, in terms of spontaneous electric activity of the cerebral cortex, but also for detecting a general spectrum of signals which are the consequence of specific transient stimuli-events-actions-feelings-behaviours, including those caused by the movement of the muscles.

Reverting to figure 2, reference numeral 5 designates memory means in which a first database is recorded in which a plurality of different human vocal messages are codified, corresponding to different signals 4 which the microprocessor 3 receives, representing stimuli-events-actions-feelings-behaviours of the animals.

To this end, the microprocessor 3 is programmed for selecting in the memory means 5 the message corresponding to the signal 4 which is received and for activating a loudspeaker 6, in order to send at the output, towards a person 7, a vocal message corresponding to the thought/wish of the animal.

The unit 1 further comprises vocal recognition means 8, which receive a vocal message 9 emitted by a person 7 and send signals 10 at the output which are received by the microprocessor 3.

As a function of the type of signal 10 which is received, the microprocessor 3 activates a plurality of stimuli generators 11, which send stimuli to the brain of the animal corresponding to the vocal message emitted by the user 7.

In another words, therefore, depending upon the signal 10, representing a vocal message of the human 7, which is received and decodified by the means 8, the microprocessor 3 controls the generators 11 to cause them to generate stimuli aimed to stimulate the proper nervous fibres of the animal in the cerebral area of the, animal inducing thereby the latter to take determined actions or perceive determined feelings.

The voltage applied by the stimuli generators 11 is very weak, i.e. it cannot be detected by a normal contact and has an average total power which is at least one hundred times lower than that of conventional cellular phones.

The vocal recognition means 8, which comprise an audio circuit board connected to a microphone, are able to convert, in a way known per se, a PCM (Pulse Code Modulation) digital audio signal coming from the board into a respective graphic of the amplitudes of the frequence components. With the vocal recognition means 8 there is also associated a second database (for instance codified in a suitable area of the memory means 5) containing several thousands of sample graphics, which identify different types of sounds which can be produced by the human voice. Actually, the sound entering into the system is identified by correlating it to the type of pre-recorded sound which is most close to that under examination.

Therefore, in practice, when the microphone perceives sound waves, the latter are processed by the vocal recognition means 8, which attend to selecting and codifying the useful sounds. The corresponding codes are sent to the stimuli generators 11, which convert said codes into electric signals which stimulate the nervous fibres of the animal. These signals travel until they reach the auditive cortex of the animal brain, where they are recognised as being sounds.

Vocal recognition systems, well known per se, must be adapted to the voice of the user and to his way of speaking, in order to increase accuracy of operation. These features are just ensured by using a neural network architecture.

As it is known, neural networks are mathematical systems developed in the area of research on artificial intelligence, these systems being characterised by a high level of adaptability, meant as ability of learning and storing information, as well as of using the information when necessary and, above all, as ability to approximate an unknown function between input and output.

Also in the case of the present invention a "training" period is provided for the system, in order to reach a proper configuration of the neural network, which is necessary for the proper operation of the vocal recognition system.

This learning period is also necessary to correlate properly the signals 4 to corresponding stimuli-events-actions-feelings-behaviours of the animal, in order to emit a sound message by the loudspeaker 6, and to correlate properly the electric stimuli produced by the generators 11 to the corresponding vocal message emitted by the human 7.

With reference to the first aspect, the system is trained for recording the signals 4 generated by the animal "at work". An example of this activity may consist in detecting the relation between a number of selected substances indicated by a human 7, which here acts as supervisor or trainer, and the corresponding signals 4 recorded by the microprocessor 3, which reflect the overall reactions of the animals in terms of effects-behaviours-feelings towards a determined smell-substance.

With reference to the second aspect, a number of basic words and phrases are recorded in the memory means 5 of the microprocessor 3, by means of the vocal recognition means 8. The vocalization of these words/phrases is associated to specific actions which the dog must take and their emission is controlled by the human 7, which also in this case acts as supervisor or trainer, through the neural network implemented in the control logic of the system. The algorithms of the neural network will produce the best relation between the vocal input provided by the human 7 and the output of the stimuli generators 11.

From the foregoing, it appears that the unit 1 provides actually an interface system between human and animal able to support a bi-directional communication, where:
- the input from-animal-to-human communication is constituted by data detected by means of sensors 2 and the output is the indication of the "status" in which the animal is at the moment, explicited by means of the loudspeaker 6,
- the input from-human-to-animal communication is constituted by vocal instructions coming from the human 7, detected by the vocal recognition means 8, while the output is provided by the stimuli generated by generators 11,
- the whole system being controlled by the neural network logic implemented in the microprocessor 3.

Due to the indicated features, the unit 1 according to the invention is able to simulate an exchange of human vocal messages between the user and the animal, in which the vocal messages "caused" by the animal are actually pre-recorded messages which are however selected by the microprocessor 3 so that they actually correspond to feelings-behaviours-thoughtswishes of the animal.

According to an important feature of the invention, the provision of the neural network control system and the vocal recognition system 8 enables the microprocessor 3 to activate a self-learning logic in which the human 7 can correct or confirm by his vocal messages the vocal messages which the loudspeaker 6 emits on the basis of signals 4.

On the other hand, the animal is brought to develop its own language with time, with an evolutive process, through the interactive loop: brain-sensors 2-loudspeaker 6-microphone-emitters 11-brain, i.e. by hearing, with the aid of means 8 and loudspeaker 6, the vocalizations which the animal itself generates in association to its reactions to the environment.

All the above-indicated components, as well as the means necessary for the electric supply, can be made with modern technologies, in miniaturized dimensions and can be therefore positioned easily on the body of the animal, preferably on a single collar.

Naturally, while the principle of the invention remains the same, the details of construction and the embodiments may widely vary with respect to what has been described and illustrated purely by way of example, without departing from the scope of the present invention.

For instance, in a possible embodiment of the invention, the signal which reaches the vocal recognition means 8, coming from the human, and the signal detected by the sensors 2, coming from the animal, interact in the neural network, in order to generate an answer or a stimulus which varies depending upon the interaction between the instructions from the human and the mental status of the animal.

## Claims

1. A vocal connection system between humans and animals, particularly domestic animals, comprising:
- a matrix of sensors (2) to be positioned on the animal, in particular on its head and/or its neck, for converting stimuli detected on the body of the animal into first electric signals (4) which are indicative of a status of the animal, in terms of feelings, events, actions or behaviours,
- processing means (3) operatively associated to the matrix of sensors (2), including memory means (5)
in which human vocal messages are recorded corresponding to various status of the animal,
- a loudspeaker (6) operatively connected to the processing means (3),
said processing means (3) being provided for receiving the first signals (4) coming from the sensors (2) and for activating said loudspeaker (6) in order to emit a human vocal message selected in said memory means (5), depending upon the received first signals (4), thus simulating the possibility of speaking for the animal,
the system further comprising
- vocal recognition means (8) able to send second signals (10) to the processing means (3), which are representative of the contents of vocal messages (9), and
- stimuli generating means (11) operatively associated to the body of the animal, in particular to its head and/or neck, which receive said second signals (10) from the processing means (3) and send corresponding stimuli to the animal brain, so as to induce the animal to take determined actions or perceive determined feelings.

2. System according to claim 1, **characterised in that** said processing means (3) are programmed to provide an interactive self-learning method, where the user (7) can correct or confirm the vocal messages emitted by said loudspeaker (6), by his vocal messages (9).

3. System according to claim 1 or 2, **characterised in that** the matrix of sensors (2), the processing means (3), the loudspeaker (6), the vocal recognition means (8) and the stimuli generating means (11) are integrated in a collar (C).

4. System according to claim 1, **characterised in that** the vocal recognition means (8) are used as supplementary means in addition to said sensors (2) in order to improve the interpretation of the status of the animal as detected by said sensors (2).

5. System according to claim 1, **characterised in that** it is operative to develop with the time a language proper of the animal, by means of an evolutive process, through the hearing by the animal of the vocalization which the animal generates in association with its reactions to the environment.

6. System according to claim 1, **characterised in that** sensors (2) are provided to detect stimuli of different origin coming from the animal.

7. System according to claim 6, **characterised in that** there are provided first electrodes to detect the electric activity of the animal brain and second electrodes to detect the electric activity of muscles and/or nerves of the animal.

8. System according to claim 1, **characterised in that** at least first and second sensors (2) are positioned just below respective ears of the animal, or in any case close to the occipital cortex of the animal, and further sensors (2) are arranged around the neck of the animal.

9. System according to claim 1, **characterised in that** a neural network control system is implemented in said processing means (3).

10. A method for allowing vocal connection between humans and animals, particularly domestic animals, comprising the following steps:
i) stimuli which are indicative of a status of an animal, in terms of feelings, events, actions, thoughts, wishes or behaviours, are detected on the body of the animal;
ii) the detected stimuli are converted into first electric signals (4), which are sent to processing means (3);
iii) the processing means (3) selects a stored human-type vocal message corresponding to received first electric signals (4) and activates as a consequence a loudspeaker (6) for emitting a selected human-type vocal message, thus simulating the possibility of speaking for the animal;
iv) vocal recognition means (8) are operative for receiving human-type vocal messages (9) and sending respective second electric signals (10) to the processing means (3);
v) the processing means (3) generates, in function of the type of the received second electric signals (10), stimuli (11) which are sent to the brain of the animal, so as to induce the latter to take determined actions or perceive determined feelings,
whereby the animal is brought to develop its own language in the time with an evolutive process, through an interactive loop comprising steps i) to v), including the hearing by the animal of the vocalizations it generates, as per steps i) to iii), in association with its reactions to the environment.

## Patentansprüche

1. Stimmenverbindungssystem zwischen Menschen und Tieren, insbesondere Haustieren, das aufweist:
- eine Matrix aus Sensoren (2), um an dem Tier positioniert zu werden, insbesondere an seinem Kopf und/oder seinem Hals, zum Umwandeln von Stimuli, erfasst an dem Körper des Tiers, in erste elektrische Signale (4), die für einen Zustand des Tiers, im Hinblick auf Gefühle, Ereignisse, Aktionen oder Verhaltensweisen, kennzeichnend sind,
- eine Verarbeitungseinrichtung (3), die betriebsmäßig der Matrix aus Sensoren (2) zugeordnet ist, umfassend eine Speichereinrichtung (5), in der menschliche Stimmennachrichten entsprechend zu einem unterschiedlichen Zustand des Tiers aufgezeichnet sind,
- einen Lautsprecher (6), der betriebsmäßig mit der Verarbeitungseinrichtung (3) verbunden ist,
- wobei die Verarbeitungseinrichtung (3) zum Aufnehmen der ersten Signale (4), die von den Sensoren (2) ankommen, und zum Aktivieren des Lautsprechers (6), um eine menschliche Stimmennachricht, ausgewählt in der Speichereinrichtung (5), in Abhängigkeit von den empfangenen, ersten Signalen (4) abzugeben, vorgesehen ist, um so die Möglichkeit eines Sprechens für das Tier zu simulieren,
wobei das System weiterhin aufweist:
- eine Stimmenerkennungseinrichtung (8), die in der Lage ist, zweite Signale (10) zu der Verarbeitungseinrichtung (3) zu senden, die für die Inhalte von Stimmennachrichten (9) repräsentativ sind, und
- eine Stimuli-Erzeugungseinrichtung (11), die betriebsmäßig dem Körper des Tiers, insbesondere seinem Kopf und/oder seinem Hals, zugeordnet ist, die die zweiten Signale (10) von der Verarbeitungseinrichtung (3) aufnimmt und entsprechende Stimuli zu dem Gehim des Tieres sendet, um so das Tier dazu zu bringen, dass es bestimmte Aktionen vornimmt oder bestimmte Gefühle wahmimmt.

2. System nach Anspruch 1, **dadurch gekennzeichnet, dass** die Verarbeitungseinrichtung (3) so programmiert ist, um ein interaktives Selbsterlernungsverfahren bereitzustellen, wobei der Benutzer (7) die Stimmennachrichten, abgegeben durch den Lautsprecher (6), durch seine Stimmennachrichten (9) korrigieren oder bestätigen kann.

3. System nach Anspruch 1 oder 2, **dadurch gekennzeichnet, dass** die Matrix der Sensoren (2), die Verarbeitungseinrichtung (3), der Lautsprecher (6), die Stimmenerkennungseinrichtung (8) und die Stimuli-Erzeugungseinrichtung (11) in einem Halsband (C) integriert sind.

4. System nach Anspruch 1, **dadurch gekennzeichnet, dass** die Stimmenerkennungseinrichtung (8) als Zusatzeinrichtung zusätzlich zu den Sensoren (2) verwendet wird, um die Interpretation des Zustands des Tiers, wie er durch die Sensoren (2) erfasst ist, zu verbessern.

5. System nach Anspruch 1, **dadurch gekennzeichnet, dass** es so arbeitet, um, mit der Zeit, eine Spracheigenschaft des Tiers, mittels eines evolutiven Vorgangs, über das Hören durch das Tier der Stimmenumsetzung, die das Tier in Zuordnung zu seinen Reaktionen an die Umgebung hin erzeugt, zu entwickeln.

6. System nach Anspruch 1, **dadurch gekennzeichnet, dass** die Sensoren (2) so vorgesehen sind, um Stimuli eines unterschiedlichen Ursprungs, von dem Tier kommend, zu erfassen.

7. System nach Anspruch 6, **dadurch gekennzeichnet, dass** erste Elektroden, um die elektrische Aktivität des Gehirns des Tiers zu erfassen, und zweite Elektroden, um die elektrische Aktivität von Muskeln und/oder Nerven des Tiers zu erfassen, vorgesehen sind.

8. System nach Anspruch 1, **dadurch gekennzeichnet, dass** mindestens ein erster und mindestens ein zweiter Sensor (2) unmittelbar unterhalb der jeweiligen Ohren des Tiers, oder in jedem Fall nahe zu dem Occipital Cortex des Tiers, positioniert sind, und weiterhin Sensoren (2) um den Hals des Tiers herum angeordnet sind.

9. System nach Anspruch 1, **dadurch gekennzeichnet, dass** ein Neural-Netzwerk-Steuersystem in der Verarbeitungseinrichtung (3) ausgeführt ist.

10. Verfahren, um eine Stimmenverbindung zwischen Menschen und Tieren, insbesondere Haustieren, zu schaffen, das die folgenden Schritte aufweist:
i) Stimuli, die für einen Zustand eines Tiers kennzeichnend sind, in Bezug auf Gefühle, Ereignisse, Aktionen, Denkweisen, Wünsche oder Verhaltensweisen, werden an dem Körper des Tiers erfasst;
ii) die erfassten Stimuli werden in erste elektrische Signale (4) umgewandelt, die zu einer Verarbeitungseinrichtung (3) geschickt werden;
iii) die Verarbeitungseinrichtung (3) wählt eine gespeicherte Stimmennachricht eines menschlichen Typs entsprechend zu empfangenen, ersten elektrischen Signalen (4) aus und aktiviert, als eine Folge, einen Lautsprecher (6), um eine ausgewählte Stimmennachricht vom menschlichen Typ auszugeben, um so die Möglichkeit einer Sprache für das Tier zu simulieren;
iv) eine Stimmenerkennungseinrichtung (8) so arbeitet, um Stimmennachrichten (9) vom menschlichen Typ aufzunehmen und jeweilige, zweite, elektrische Signale (10) zu der Verarbeitungseinrichtung (3) zu senden;
v) die Verarbeitungseinrichtung (3) erzeugt, als Funktion des Typs der empfangenen, zweiten elektrischen Signale (10), Stimuli (11), die zu dem Gehirn des Tiers geschickt werden, um so das letztere dazu zu bringen, bestimmte Aktionen vorzunehmen oder bestimmte Gefühle wahrzunehmen, wodurch das Tier dazu gebracht wird, seine eigene Sprache über die Zeit mit einem evolutiven Vorgang, über eine interaktive Schleife, zu entwickeln, die die Schritte i) bis v) aufweist, umfassend das Hören, durch das Tier, der Stimmenumsetzungen, die es, entsprechend zu Schritten i) bis iii), in Zuordnung zu seinen Reaktionen an die Umgebung erzeugt.

## Revendications

1. Système de connexion vocale entre des êtres humains et des animaux, en particulier des animaux domestiques, comprenant :
- une matrice de capteurs (2) devant être positionnée sur l'animal, en particulier sur sa tête et/ou autour de son cou, pour convertir les stimuli détectés sur le corps de l'animal en premiers signaux électriques (4) indiquant un état de l'animal en termes de sentiments, d'événements, d'actions ou de comportements ;
- un moyen de traitement (3) associé, de façon fonctionnelle, à la matrice de capteurs (2) comprenant des moyens de mémoire (5) dans lesquels sont enregistrés des messages vocaux humains correspondant à divers états de l'animal ;
- un haut-parleur (6) connecté, de façon fonctionnelle, au moyen de traitement (3) ;
ledit moyens de traitement (3) étant prévu pour recevoir les premiers signaux (4) provenant des capteurs (2) et pour activer ledit haut-parleur (6) afin d'émettre un message vocal humain sélectionné dans lesdits moyens de mémoire (5) selon les premiers signaux reçus (4), simulant ainsi une possibilité de parole chez l'animal ;
le système comprenant, de plus :
- des moyens de reconnaissance vocale (8) pouvant envoyer des seconds signaux (10) au moyen de traitement (3) qui sont représentatifs du contenu des messages vocaux (9) ; et
- des moyens de génération de stimuli (11) associés, de façon fonctionnelle, au corps de l'animal, en particulier à sa tête et/ou son cou, recevant lesdits seconds signaux (10) à partir du moyen de traitement (3) et envoyant des stimuli correspondants au cerveau de l'animal de façon à induire chez l'animal des actions déterminées ou la perception de sentiments déterminés.

2. Système selon la revendication 1, **caractérisé en ce que** ledit moyen de traitement (3) est programmé pour fournir un procédé d'apprentissage interactif selon lequel l'utilisateur (7) peut corriger ou confirmer les messages vocaux émis par ledit haut-parleur (6) à l'aide de ses propres messages vocaux (9).

3. Système selon la revendication 1 ou 2, **caractérisé en ce que** la matrice de capteurs (2), le moyen de traitement (3), le haut-parleur (6), les moyens de reconnaissance vocale (8) et les moyens de génération de stimuli (11) sont intégrés dans un collier (C).

4. Système selon la revendication 1, **caractérisé en ce que** les moyens de reconnaissance vocale (8) sont utilisés comme moyens supplémentaires en plus desdits capteurs (2) de façon à améliorer l'interprétation de l'état de l'animal tel que détecté par lesdits capteurs (2).

5. Système selon la revendication 1, **caractérisé en ce qu'**il est prévu pour développer dans le temps un langage propre à l'animal au moyen d'un processus évolutif par l'intermédiaire de l'écoute par l'animal de l'expression vocale générée par lui en association avec ses réactions à l'environnement.

6. Système selon la revendication 1, **caractérisé en ce que** les capteurs (2) sont prévus pour détecter des stimuli d'origines différentes provenant de l'animal.

7. Système selon la revendication 6, **caractérisé en ce que** des premières électrodes sont prévues pour détecter l'activité électrique du cerveau de l'animal et des secondes électrodes pour détecter l'activité électrique des muscles et/ou des nerfs de l'animal.

8. Système selon la revendication 1, **caractérisé en ce qu'**au moins des premier et second capteurs (2) sont positionnés juste en dessous des oreilles respectives de l'animal ou dans tous les cas, près du cortex occipital de l'animal, et des capteurs supplémentaires (2) sont agencés autour du cou de l'animal.

9. Système selon la revendication 1, **caractérisé en ce qu'**un système de commande de réseau neuronal est mis en oeuvre dans lesdits moyens de traitement (3).

10. Procédé permettant une connexion vocale entre des êtres humains et des animaux, en particulier des animaux domestiques, comprenant les étapes suivantes :
i) des stimuli indiquant un état d'un animal en termes de sentiments, d'événements, d'actions, de pensées, de désirs ou de comportements, sont détectés sur le corps de l'animal ;
ii) les stimuli détectés sont convertis en premiers signaux électriques (4) qui sont envoyés au moyen de traitement (3) ;
iii) le moyen de traitement (3) sélectionne un message vocal stocké du type humain correspondant aux premiers signaux électriques reçus (4) et active, en conséquence, un haut-parleur (6) pour émettre un message vocal sélectionné du type humain, simulant ainsi une possibilité de parole chez l'animal ;
iv) les moyens de reconnaissance vocale (8) sont prévus pour recevoir des messages vocaux du type humain (9) et pour envoyer des seconds signaux électriques respectifs (10) au moyen de traitement (3) ;
v) le moyen de traitement (3) génère en fonction du type des seconds signaux électriques reçus (10) des stimuli (11) qui sont envoyés au cerveau de l'animal afin d'induire chez ce dernier des actions déterminées ou une perception de sentiments déterminés ;
l'animal étant ainsi amené à développer son propre langage dans le temps à l'aide d'un processus évolutif par l'intermédiaire d'une boucle interactive comprenant les étapes i) à v), comprenant l'écoute par l'animal des expressions vocales qu'il génère, comme selon les étapes i) à iii) en association avec ses réactions à l'environnement.
